# EUROPÄISCHE PATENTANMELDUNG

(11) **EP 3 456 470 A2**
(43) Veröffentlichungstag der Anmeldung: **20.03.2019**
(21) Anmeldenummer: 18194739.1
(22) Anmeldetag: 17.09.2018
(51) Int. Cl.: B23Q 17/24, B23Q 3/155, G05B 19/406

(54) **SYSTEM ZUM WECHSELN UND EINLEGEN BZW. VORLEGEN VON WERKZEUGEN AN EINER WERKZEUGMASCHINE, UND WERKZEUGMASCHINE MIT EINEM DERARTIGEN SYSTEM**

(30) Priorität: 18.09.2017 DE 102017216447
(71) Anmelder: DECKEL MAHO Pfronten GmbH, 87459 Pfronten (DE)
(72) Erfinder: KETTEMER, Rolf, 87616 Marktoberdorf (DE); BELONI, Daniel, 87499 Wildpoldsried (DE)
(74) Vertreter: MERH-IP Matias Erny Reichl Hoffmann Patentanwälte PartG mbB

(57) **Zusammenfassung**

Die vorliegende Erfindung betrifft ein System zum Wechseln und Einlegen bzw. Vorlegen von Werkzeugen an einer Werkzeugmaschine 200, umfassend: eine Werkzeugwechselvorrichtung mit einem Manipulator 120, der dazu eingerichtet ist, in einem automatischen Werkzeugwechselvorgang ein einzuwechselndes Werkzeug 101 aus einem Werkzeugmagazin 110 der Werkzeugmaschine 200 an einer Entnahmeposition zu entnehmen und einer Arbeitsspindel 202 der Werkzeugmaschine an einer Werkzeugwechselposition zu übergeben, und eine Werkzeugdurchmesser-Messvorrichtung 140, die dazu eingerichtet ist, einen Werkzeugdurchmesser bzw. Werkzeugradius des von dem Manipulator 120 aus dem Werkzeugmagazin 110 der Werkzeugmaschine 200 entnommenen einzuwechselnden Werkzeugs 101 zu bestimmen.

## Beschreibung

Die vorliegende Erfindung betrifft ein System zum Wechseln und Einlegen bzw. Vorlegen von Werkzeugen an einer Werkzeugmaschine und eine Werkzeugmaschine mit einem derartigen System.

### HINTERGRUND

Aus der WO 2013/030373 A1 ist ein System zum Wechseln und Einlegen bzw. Vorlegen von Werkzeugen an einer Werkzeugmaschine und eine Werkzeugmaschine mit einem derartigen System bekannt. Hierbei handelt es sich um ein System umfassend ein Werkzeugmagazin zur Aufnahme einer Mehrzahl von Werkzeugen zum Einsatz an einer Werkzeugmaschine, insbesondere einer numerisch gesteuerten Werkzeugmaschine.

Die Werkzeugmaschine umfasst z.B. mehrere Linear- und/oder Schwenk- bzw. Rundachsen zur Steuerung einer Relativbewegung eines an der Arbeitsspindel der Werkzeugmaschine aufgenommenen Werkzeugs relativ zu einem an der Werkzeugmaschine eingespannten Werkstück.

Hierbei war es bisher bekannt, für Fräs-/Bohrbearbeitung andere Werkzeugmaschinen vorzusehen, z.B. Fräsmaschinen, Fräs-/Drehmaschinen, Universal-Werkzeugmaschinen und Bearbeitungszentren, als für Schleifbearbeitungen, für die bisher speziell für die Schleifbearbeitung vorgesehene Spezialmaschinen bzw. Schleifmaschinen vorgesehen waren.

Nunmehr ist es jedoch vorgesehen, die für Fräsbearbeitung eingerichteten Werkzeugmaschinen ebenfalls für die Schleifbearbeitung einzurichten, so dass Werkzeugmaschinen mit Werkzeugwechselvorrichtungen vorgesehen sind, die sowohl Fräswerkzeuge als auch Schleifwerkzeuge an der Werkzeugmaschine einsetzen können, so dass Fräs- und Schleifbearbeitungen an derselben Werkzeugmaschine und insbesondere ohne dazwischenliegende Standzeiten durchgeführt werden können. Hierfür wird z.B. in der DE 20 2017 000 560 U1 ein Werkzeughalter vorgeschlagen, der an einer herkömmlichen, in einem Werkzeugmagazin bzw. einer werkzeugtragenden Arbeitsspindel aufnehmbaren Werkzeugschnittstelle, wie z.B. einer HSK-Schnittstelle (Hohlschaftkegel-Schnittstelle), eine Schleifscheibe zur Schleifbearbeitung halten kann. Somit können Werkzeugmagazine nunmehr an einer Universal-Werkzeugmaschine mit Werkzeugwechselvorrichtung mit Fräswerkzeugen, Bohrwerkzeugen als auch Schleifwerkzeugen bestückt werden, und über die Werkzeugwechselvorrichtung sind Fräswerkzeuge, Bohrwerkzeuge als auch Schleifwerkzeuge an der Arbeitsspindel der Werkzeugmaschine einsetzbar.

Hierbei ergibt sich die zugrundeliegende Aufgabe, ein System zum Wechseln und Einlegen bzw. Vorlegen von Werkzeugen an einer Werkzeugmaschine und eine Werkzeugmaschine mit einem solchen System zu schaffen, die es effizient, ohne Stillstandzeiten und mit der erforderlichen Sicherheit ermöglicht, an der Werkzeugmaschine sowohl Fräs- und Bohrwerkzeuge als auch Schleifwerkzeuge einzusetzen.

### ZUSAMMENFASSUNG

Zur Lösung der vorstehenden Aufgabe wird ein System zum Wechseln und Einlegen bzw. Vorlegen von Werkzeugen an einer Werkzeugmaschine gemäß Anspruch 1 und eine Werkzeugmaschine mit einem solchen System vorgeschlagen. Abhängige Ansprüche betreffen bevorzugte Ausführungsbeispiele der Erfindung.

Gemäß einem Aspekt wird ein System zum Wechseln und Einlegen bzw. Vorlegen von Werkzeugen an einer Werkzeugmaschine vorgeschlagen, umfassend eine Werkzeugwechselvorrichtung mit einem Manipulator, der dazu eingerichtet ist, in einem automatischen Werkzeugwechselvorgang ein einzuwechselndes Werkzeug aus einem Werkzeugmagazin der Werkzeugmaschine an einer Entnahmeposition zu entnehmen und einer Arbeitsspindel der Werkzeugmaschine an einer Werkzeugwechselposition zu übergeben, und eine Werkzeugdurchmesser-Messvorrichtung, die dazu eingerichtet ist, einen Werkzeugdurchmesser bzw. Werkzeugradius des von dem Manipulator aus dem Werkzeugmagazin der Werkzeugmaschine entnommenen einzuwechselnden Werkzeugs zu bestimmen.

In einem zweckmäßigen Ausführungsbeispiel ist der Manipulator dazu eingerichtet, zwischen der Entnahmeposition des Werkzeugmagazins der Werkzeugmaschine und der Werkzeugwechselposition zu verfahren.

In einem zweckmäßigen Ausführungsbeispiel ist die Werkzeugdurchmesser-Messvorrichtung dazu eingerichtet, den Werkzeugdurchmesser bzw. Werkzeugradius des von dem Manipulator aus dem Werkzeugmagazin der Werkzeugmaschine entnommenen einzuwechselnden Werkzeugs an einer zwischen der Entnahmeposition und der Werkzeugwechselposition angeordneten Messposition zu bestimmen.

In einem zweckmäßigen Ausführungsbeispiel weist der Manipulator einen Werkzeuggreifer zum Greifen des einzuwechselnden Werkzeugs auf.

In einem zweckmäßigen Ausführungsbeispiel ist die Werkzeugdurchmesser-Messvorrichtung dazu eingerichtet, den Werkzeugdurchmesser bzw. Werkzeugradius des von dem Manipulator an dem Werkzeuggreifer gehaltenen Werkzeugs zu bestimmen.

In einem zweckmäßigen Ausführungsbeispiel weist die Werkzeugdurchmesser-Messvorrichtung eine optische Vermessungseinrichtung zum optischen Vermessen des einzuwechselnden Werkzeugs auf, insbesondere umfassend eine Kamera und/oder ein Lichtgitter.

In einem zweckmäßigen Ausführungsbeispiel weist die Werkzeugdurchmesser-Messvorrichtung einen Lichtgitter-Empfänger und einen Lichtgitter-Sender auf.

In einem zweckmäßigen Ausführungsbeispiel ist der Lichtgitter-Empfänger oder der Lichtgitter-Sender an dem Manipulator der Werkzeugwechselvorrichtung angeordnet.

In einem zweckmäßigen Ausführungsbeispiel sind/ist der Lichtgitter-Sender und/oder der Lichtgitter-Empfänger an einem das Werkzeugmagazin haltenden Gestell angeordnet.

In einem zweckmäßigen Ausführungsbeispiel ist/sind der Lichtgitter-Sender und/oder der Lichtgitter-Empfänger in einem jeweiligen durchsichtigen Gehäuse, insbesondere aus Kunststoff oder Glas, angeordnet.

In einem zweckmäßigen Ausführungsbeispiel umfasst das System einen Positionssensor, der dazu eingerichtet ist, festzustellen, wenn der Manipulator sich an einer Messposition befindet, und die Werkzeugdurchmesser-Messvorrichtung ist vorzugsweise dazu eingerichtet, den Werkzeugdurchmesser bzw. Werkzeugradius des von dem Manipulator aus dem Werkzeugmagazin der Werkzeugmaschine entnommenen einzuwechselnden Werkzeugs zu bestimmen, wenn der Positionssensor feststellt, dass der Manipulator sich an der Messposition befindet.

In einem zweckmäßigen Ausführungsbeispiel umfasst das System eine Sicherheitsvorrichtung, die dazu eingerichtet ist, auf Basis eines von der Werkzeugdurchmesser-Messvorrichtung ermittelten Werkzeugdurchmessers bzw. Werkzeugradius eine maximal zulässige Spindeldrehzahl der Arbeitsspindel für das einzuwechselnde Werkzeug zu bestimmen.

In einem zweckmäßigen Ausführungsbeispiel ist die Sicherheitsvorrichtung dazu eingerichtet, auf Basis des von der Werkzeugdurchmesser-Messvorrichtung ermittelten Werkzeugdurchmessers bzw. Werkzeugradius und des Werkzeugtyps eine maximal zulässige Spindeldrehzahl der Arbeitsspindel für das einzuwechselnde Werkzeug zu bestimmen.

In einem zweckmäßigen Ausführungsbeispiel ist die Sicherheitsvorrichtung dazu eingerichtet, die Spindeldrehzahl der Arbeitsspindel bei der Bearbeitung eines Werkstücks mit dem einzuwechselnden Werkzeug zu überwachen und einen Bearbeitungsstop durchzuführen und/oder eine Warnung an einen Bediener auszugeben, wenn die überwachte Spindeldrehzahl die eingestellte maximal zulässige Spindeldrehzahl der Arbeitsspindel für das einzuwechselnde Werkzeug überschreitet.

In einem zweckmäßigen Ausführungsbeispiel ist die Sicherheitsvorrichtung dazu eingerichtet, den von der Werkzeugdurchmesser-Messvorrichtung ermittelten Werkzeugdurchmesser bzw. Werkzeugradius des einzuwechselnden Werkzeugs mit einem Solldurchmesser bzw. Sollradius und/oder einem Solldurchmesserbereich bzw. Sollradiusbereich zu vergleichen, und einen Bearbeitungsstop durchzuführen und/oder eine Warnung an einen Bediener auszugeben, wenn der von der Werkzeugdurchmesser-Messvorrichtung ermittelte Werkzeugdurchmesser bzw. Werkzeugradius des einzuwechselnden Werkzeugs von dem Solldurchmesser bzw. Sollradius und/oder dem Solldurchmesserbereich bzw. Sollradiusbereich abweicht.

Gemäß einem weiteren Aspekt wird eine Werkzeugmaschine vorgeschlagen, mit einer werkzeugtragenden Arbeitsspindel, einem Werkzeugmagazin, und einem System gemäß einem der vorstehenden Aspekte.

In einem zweckmäßigen Ausführungsbeispiel ist eine Steuervorrichtung der Werkzeugmaschine mit der Werkzeugdurchmesser-Messvorrichtung verbunden und dazu eingerichtet, auf Basis eines von der Werkzeugdurchmesser-Messvorrichtung ermittelten Werkzeugdurchmessers bzw. Werkzeugradius eine maximal zulässige Spindeldrehzahl der Arbeitsspindel für das einzuwechselnde Werkzeug einzustellen.

In einem zweckmäßigen Ausführungsbeispiel ist die Steuervorrichtung der Werkzeugmaschine dazu eingerichtet, auf Basis des von der Werkzeugdurchmesser-Messvorrichtung ermittelten Werkzeugdurchmessers bzw. Werkzeugradius und des Werkzeugtyps eine maximal zulässige Spindeldrehzahl der Arbeitsspindel für das einzuwechselnde Werkzeug einzustellen.

In einem zweckmäßigen Ausführungsbeispiel ist die Steuervorrichtung der Werkzeugmaschine dazu eingerichtet, die Spindeldrehzahl der Arbeitsspindel bei der Bearbeitung eines Werkstücks mit dem einzuwechselnden Werkzeug zu überwachen und einen Bearbeitungsstop durchzuführen und/oder eine Warnung an einen Bediener auszugeben, wenn die überwachte Spindeldrehzahl die eingestellte maximal zulässige Spindeldrehzahl der Arbeitsspindel für das einzuwechselnde Werkzeug überschreitet.

In einem zweckmäßigen Ausführungsbeispiel ist die Steuervorrichtung dazu eingerichtet, den von der Werkzeugdurchmesser-Messvorrichtung ermittelten Werkzeugdurchmesser bzw. Werkzeugradius des einzuwechselnden Werkzeugs mit einem Solldurchmesser bzw. Sollradius und/oder einem Solldurchmesserbereich bzw. Sollradiusbereich zu vergleichen, und einen Bearbeitungsstop durchzuführen und/oder eine Warnung an einen Bediener auszugeben, wenn der von der Werkzeugdurchmesser-Messvorrichtung ermittelte Werkzeugdurchmesser bzw. Werkzeugradius des einzuwechselnden Werkzeugs von dem Solldurchmesser bzw. Sollradius und/oder dem Solldurchmesserbereich bzw. Sollradiusbereich abweicht.

### KURZBESCHREIBUNG DER FIGUREN

- Fig. 1: zeigt schematisch eine Perspektivansicht eines Systems zum Wechseln und Einlegen bzw. Vorlegen von Werkzeugen an einer Werkzeugmaschine gemäß einer beispielhaften Ausführungsform an einer Werkzeugmaschine;
- Fig. 2: zeigt schematisch eine Detailansicht eines Systems zum Wechseln und Einlegen bzw. Vorlegen von Werkzeugen an einer Werkzeugmaschine gemäß einer beispielhaften Ausführungsform an einer Werkzeugmaschine;
- Fig. 3: zeigt schematisch eine Vorderansicht eines Systems zum Wechseln und Einlegen bzw. Vorlegen von Werkzeugen an einer Werkzeugmaschine gemäß einer beispielhaften Ausführungsform an einer Werkzeugmaschine;
- Figs. 4A, 4B und 4C: illustrieren schematisch eine Durchmessermessung eines Werkzeugs an einem System zum Wechseln und Einlegen bzw. Vorlegen von Werkzeugen an einer Werkzeugmaschine gemäß einer beispielhaften Ausführungsform an einer Werkzeugmaschine; und
- Fig. 5: zeigt ein beispielhaftes Ablaufdiagram eines Werkzeugwechsels gemäß eines Ausführungsbeispiels.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein. Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

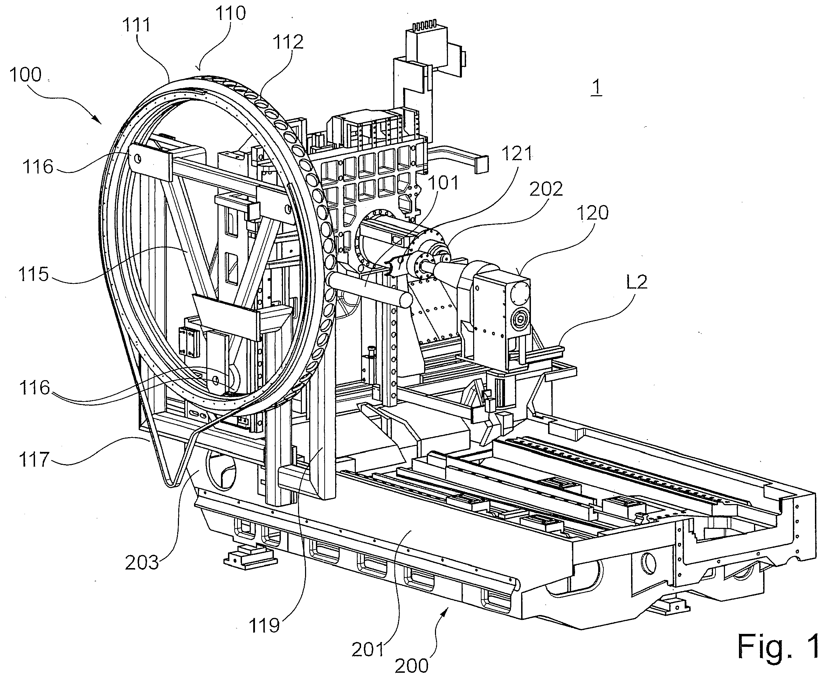

Fig. 1 zeigt beispielhaft ein System 1 zum Wechseln und Einlegen bzw. Vorlegen von Werkzeugen in einer Werkzeugmaschine 200 bei dem das Werkzeugmagazin 110 beispielhaft als Radmagazin ausgestaltet ist.

Die Werkzeugmaschine 200 ist beispielhaft mit einer werkzeugtragenden Arbeitsspindel 202 ausgestattet. Zudem weist die Werkzeugmaschine 200 ein Maschinenbett 201 auf, auf dem ein Werkstückeinspanntisch anordenbar ist. Zudem kann die Werkzeugmaschine 200 eine oder mehrere Linearachsen umfassen, bevorzugt drei Linearachsen (X-, Y-, und Z-Achse) jeweils zum Antreiben einer translatorischen Relativbewegung eines auf dem Werkstückeinspanntisch eingespannten Werkzeug relativ zu einem an der Arbeitsspindel 202 eingespannten Werkzeug. Zudem kann die Werkzeugmaschine 200 eine oder mehrere Rund bzw. Schwenkachsen umfassen, bevorzugt zwei oder drei Rund- und/oder Schwenkachsen jeweils zum Antreiben einer rotatorischen Relativbewegung des auf dem Werkstückeinspanntisch eingespannten Werkzeug relativ zu dem an der Arbeitsspindel 202 eingespannten Werkzeug.

Das System 1 umfasst ein Werkzeugmagazin 100, das in der hier gezeigten Ausführungsform über ein ringförmiges Radmagazin 110 verfügt, in dem jeweils eine Mehrzahl von Werkzeugen 101 zur Werkzeugbevorratung aufbewahrt werden können.

Die Werkzeuge 101 sind an einem Endpunkt 102 entlang des Umfangs 111 des Radmagazins 110 gehaltert. Das Radmagazin ist als ringförmiger Hohlzylinder ausgebildet. Entlang des Umfangs 111 des Radmagazins 110, d.h. entlang der äußeren Mantelfläche befinden sich Werkzeugaufnahmen 112, die eine lösbare Verbindung mit den Werkzeugen 101 eingehen können.

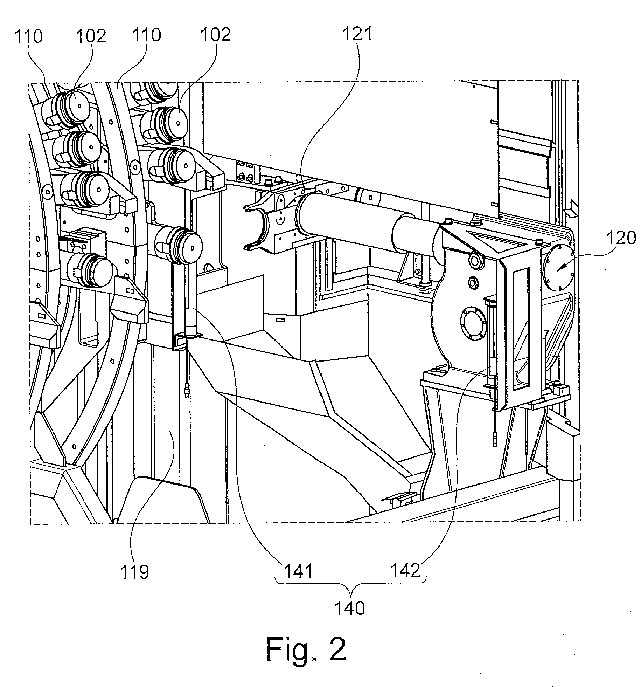

In Fig. 1 sind die Werkzeugaufnahmen 112 als Lochstruktur entlang der äußeren Mantelfläche des Radmagazins angeordnet sind, was eine besonders leichte Bauweise ermöglicht. Die Werkzeuge werden in den Aufnahmen 112 aufgrund der Flieh- und der Gravitationskraft verriegelt. Im vorliegenden Beispiel wird hierzu eine Aktivverriegelung durch Rastverbindung mit den Werkzeugen realisiert, bei der die Werkzeuge in einer formschlüssigen Verbindung zwangsverriegelt werden. Zur Befestigung der Werkzeuge 101 in den Werkzeugaufnahmen 112 wird beispielhaft ein selbsthaltender HohlschaftKegel mit Plananlage (HSK) als Werkzeugschnittstelle 102 verwendet (siehe Fig. 2). Alternativ kann auch ein Steilkegel oder Morsekegel eingesetzt werden.

Die Werkzeuge sind somit nur an einem ihrer Längsenden am äußeren Umfang des Radmagazins 110 befestigt, so dass die Werkzeuge in radialer Richtung vom Außenumfang des Radmagazins nach außen strahlenförmig abstehen. Dadurch liegen die Längsachsen der Werkzeuge in einer Ebene. Dadurch können die Werkzeuge äußerst kompakt und dicht entlang des Umfangs 111 des Radmagazins 110 nebeneinander angeordnet werden.

Das Radmagazin 110 kann mit allen gängigen Werkzeugen für die spanlose und spangebende Fertigung bestückt werden. Fig. 1 zeigt zur Verdeutlichung des Konstruktionsprinzips nur eine Bestückung mit einem Werkzeug 101. Zudem kann das Radmagazin 110 einerseits z.B. mit Fräswerkzeugen und andererseits auch mit Schleifwerkzeugen (z.B. Schleifscheiben) bestückt sein.

Das Radmagazin ist beispielhaft mittels eines Dreiecksrahmens 115 gelagert, an dessen drei Endpunkten jeweils ein Laufrad 116 angeordnet ist. Neben der hier gezeigten Dreipunktlagerung ist auch eine Vier- oder Mehrpunktlagerung möglich. Anstatt des Dreiecksrahmens 115 kann das Radmagazin auch durch eine Mittelachse gelagert werden. Die Rotation des Radmagazins 110 erfolgt über einen Kettenantrieb, wobei in Fig. 1 lediglich die Antriebskette 117 dargestellt ist. Anstatt dem hier gezeigten Kettenantrieb kann das Radmagazin 110 auch direkt über ein Ritzel oder über Reibschluss angetrieben werden.

Das System 1 umfasst weiterhin einen beispielhaft horizontal verfahrbaren Manipulator 120 zur Entnahme der Werkzeuge 101 aus dem Werkzeugmagazin 100, so dass diese der Werkzeugspindel 202 der Werkzeugmaschine 200 zugeführt werden können. Hierfür ist der Manipulator 120 beispielhaft horizontal zwischen der Arbeitsspindel 202 und dem Radmagazin 110 verfahrbar. Der Manipulator 120 weist beispielhaft einen Doppelgreifer 121 auf, mit zwei Greiferabschnitten zum Greifen einer Werkzeugschnittstelle 102 eines Werkzeugs 101 (z.B. an einer Greiferrille).

Bei der Werkzeugmaschine 200 kann es sich um eine aus dem Stand der Technik bekannte Werkzeugmaschine für die spangebende oder spanlose Fertigung handeln. Besonders vorteilhaft ist das System 1 zum Wechseln und Einlegen bzw. Vorlegen von Werkzeugen für Universalbearbeitungszentren, da diese flexibel mit vielen unterschiedlichen Werkzeugen bestückt werden müssen. Eine möglichst kompakte Anordnung wird dann erreicht, wenn das Werkzeugmagazin 100 seitlich an das Bett 201 und Gestell 203 in aufrechter Position angebracht wird, um kurze Zustellwege des Manipulators 120 zur Spindel 202 zu ermöglichen. Durch die Möglichkeit einer aufrechten Positionierung der Radmagazine 110 kann das Werkzeugwechselsystem auch bei unterschiedlichen Gestellen und Bettformen fast immer möglichst nah an der Spindel positioniert werden.

Der Manipulator 120 aus dem Werkzeugmagazin 100 ist in Bezug auf das unbestückte Radmagazin 110 außenseitig, das heißt außerhalb des Umfangs des Radmagazins 110 angeordnet, so dass er die Werkzeuge 101 in Richtung der Rundachse des Radmagazins und/ oder in radialer Richtung vom Radmagazin 110 nach außen entnehmen kann. Der hier schematisch dargestellte Manipulator umfasst eine erste Linearachse, die dazu geeignet ist, den Manipulator in Richtung der Rundachse des Radmagazins, das heißt in seitlicher Richtung zum Radmagazin zu verfahren um eine Horizontalbewegung zwischen Spindel 202 und Radmagazin 110 auszuführen. Der Manipulator 120 kann auch eine zweite Linearachse aufweisen, die dazu geeignet ist, den Manipulator in der Wechselposition am Radmagazin in radialer Richtung zu verfahren.

Der Manipulator 120 ist zur Entnahme der Werkzeuge 101 im gezeigten Ausführungsbeispiel als Schwertwechsler mit Doppelgreifer 121 ausgebildet, mit einer linksseitigen und einer rechtsseitigen Aufnahme. Der Doppelgreifer 121 ermöglicht die gleichzeitige Aufnahme des zuletzt genutzten Werkzeugs und des nachfolgend benötigten Werkzeugs, so dass ein Werkzeugtausch mit nur einer Horizontalbewegung des Manipulators 120 zwischen Spindel 202 und Werkzeugmagazin 110 möglich ist. Das Werkzeugmagazin 100 kann wahlweise mit einem oder mehreren Radmagazinen 110 bestückt werden.

Fig. 2 zeigt schematisch eine Detailansicht eines Systems zum Wechseln und Einlegen bzw. Vorlegen von Werkzeugen an einer Werkzeugmaschine gemäß einer beispielhaften Ausführungsform an einer Werkzeugmaschine.

Fig. 2 zeigt beispielhaft zwei parallel angeordnete Radmagazine 110, an deren umfänglichen Werkzeugplätzen Werkzeugschnittstellen 102 (beispielhaft ohne Werkzeug) gehalten sind, und den Manipulator 120 mit dem beispielhaften Doppelgreifer 121 (Werkzeuggreifer).

Beispielhaft ist an dem die Radmagazine 110 haltenden Gestell 119 ein Lichtgitter-Empfänger 141 einer Werkzeugdurchmesser-Messvorrichtung 140 angeordnet, der zwischen der Arbeitsspindel 202 und dem bzw. den Radmagazinen 110 angeordnet ist. Auf gleicher Höhe zu dem Lichtgitter-Empfänger 142 ist an dem horizontal verfahrbaren Manipulator 120 ein Lichtgitter-Sender 142 der Werkzeugdurchmesser-Messvorrichtung 140 angeordnet.

In diesem Ausführungsbeispiel ist der Lichtgitter-Empfänger 141 beispielhaft stationär an dem die Radmagazine 110 haltenden Gestell 119 angeordnet und der Lichtgitter-Sender 142 der Werkzeugdurchmesser-Messvorrichtung 140 ist beispielhaft an dem verfahrbaren Manipulator 120 angeordnet, jedoch kann in anderen Ausführungsbeispielen der Lichtgitter-Sender 142 der Werkzeugdurchmesser-Messvorrichtung 140 auch stationär an dem die Radmagazine 110 haltenden Gestell 119 angeordnet sein und der Lichtgitter-Empfänger 141 kann an dem verfahrbaren Manipulator 120 angeordnet sein. In weiteren Ausführungsbeispielen können auch Lichtgitter-Empfänger 141 und Lichtgitter-Sender 142 stationär gegenüberliegend angeordnet sein, derart, dass der Manipulator 120 mit dem Werkzeuggreifer 121 zwischen Lichtgitter-Empfänger 141 und Lichtgitter-Sender 142 hindurch verfahrbar ist.

Der Lichtgitter-Sender 142 kann sichtbares oder unsichtbares Licht (z.B. im Infrarot-bereich aussenden, und der Lichtgitter-Empfänger 141 ist dazu eingerichtet, das Licht des Lichtgitter-Senders 142 zu detektieren.

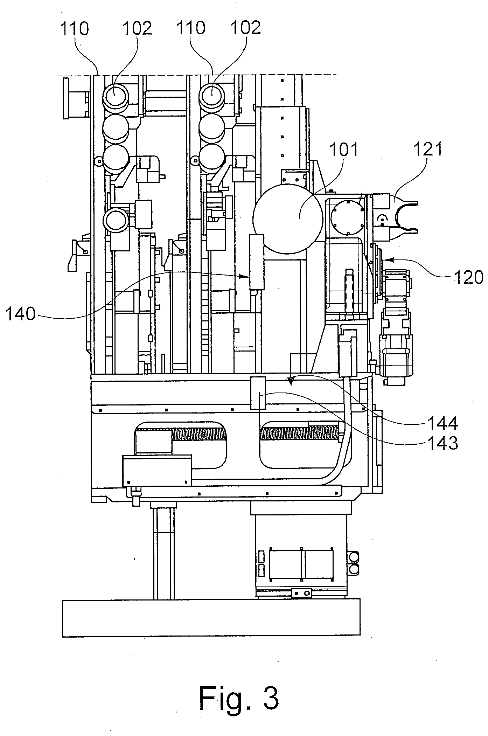

Fig. 3 zeigt schematisch eine Vorderansicht eines Systems zum Wechseln und Einlegen bzw. Vorlegen von Werkzeugen an einer Werkzeugmaschine gemäß einer beispielhaften Ausführungsform an einer Werkzeugmaschine.

In Fig. 3 ist an dem Werkzeuggreifer 121 des Manipulators 120 beispielhaft eine Schleifscheibe als Werkzeug 101 gehalten. Hierbei ist beispielhaft zu sehen, dass die in Draufsicht von Lichtgitter-Empfänger 141 und Lichtgitter-Sender 142 der Werkzeugdurchmesser-Messvorrichtung 140 überdeckte Fläche bei Verfahren des Manipulators 120 in horizontaler Richtung von den Werkzeugmagazinen 110 nach rechts hin zu der Arbeitsspindel 202 der Werkzeugmaschine 202 beispielhaft von einem unteren Abschnitt des Werkzeugs 101 bzw. der Schleifscheibe durchfahren wird.

Hierbei ist es vorgesehen, dass eine Messung der Werkzeugdurchmesser-Messvorrichtung 140 an einer vorgegebenen Position stattfindet, insbesondere dann, wenn der bewegliche Teil (d.h. in Fig. 2 z.B. der Lichtgitter-Sender 142) direkt dem stationären Teil (d.h. in Fig. 2 z.B. der Lichtgitter-Empfänger 141) gegenüberliegt.

Die Messposition wird beispielhaft durch einen Positionssensor 143, der z.B. als Induktionssensor ausgebildet sein kann, bestimmt, und über einen beweglichen Sensorteil 144, der an dem Manipulator 120 angeordnet ist und mit dem Manipulator 120 mit verfahren wird, kann detektiert werden, wenn der Manipulator 120 an der Messposition positioniert ist.

Hierbei kann die Durchmesser-Messung des Werkzeugs 110 an der Messposition bei durchfahrendem Manipulator 120 durchgeführt werden, genau zu einem Zeitpunkt, wenn über den beweglichen Sensorteil 144 und den Positionssensor 143 detektiert wird, dass der Manipulator an der Messposition positioniert ist, oder der Manipulator 120 kann angehalten werden, wenn über den beweglichen Sensorteil 144 und den Positionssensor 143 detektiert wird, dass der Manipulator an der Messposition positioniert ist, um die Durchmesser-Messung des Werkzeugs 110 an der Messposition bei angehaltenem Manipulator 120 durchzuführen.

In beiden Fällen kann die Durchmesser-Messung des Werkzeugs 110 während des Einwechselns eines Werkzeugs 101 an der Arbeitsspindel 202 durchgeführt werden, so dass zusätzliche Standzeiten an der Werkzeugmaschine vorteilhaft vermieden werden können, wie es z.B. der Fall wäre, wenn die Durchmesser-Messung an einer designierten Stelle im Arbeitsraum oder an der Arbeitsspindel durchgeführt würde. Zudem ist es vorteilhaft möglich, zusätzliche Sensoren oder Kameras im Arbeitsraum der Werkzeugmaschine 200 zu vermeiden.

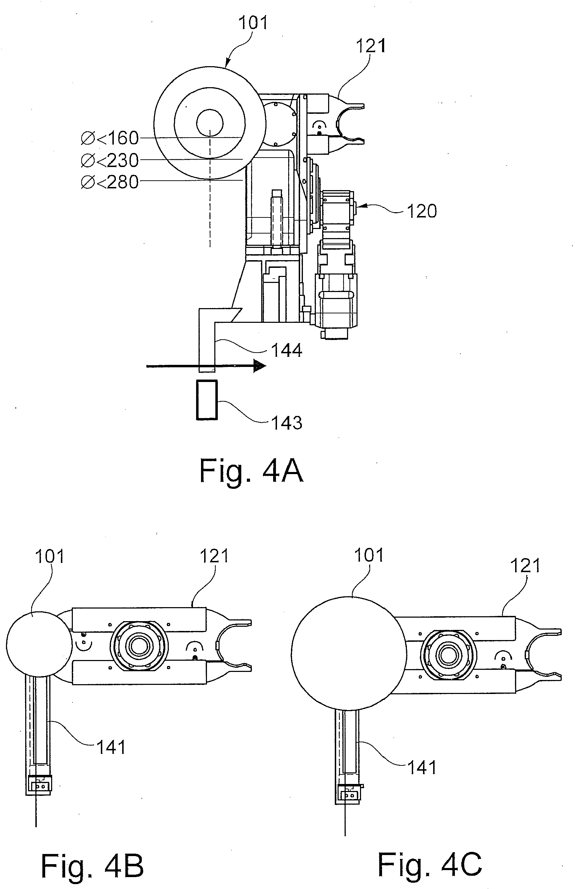

Figs. 4A, 4B und 4C illustrieren schematisch eine Durchmessermessung eines Werkzeugs an einem System zum Wechseln und Einlegen bzw. Vorlegen von Werkzeugen an einer Werkzeugmaschine gemäß einer beispielhaften Ausführungsform an einer Werkzeugmaschine.

Beispielhaft ist der Manipulator 120 in der Fig. 4A in der Messposition positioniert und somit ist der bewegliche Sensorteil 144 an dem Positionssensor 143 positioniert und der Positionssensor 143 detektiert, dass der Manipulator 120 an der Messposition positioniert ist.

In der Messposition ist das aus dem Werkzeugmagazin 110 entnommene Werkzeug 101 an dem Greiferabschnitt des Werkzeuggreifers 121 derart gehalten, dass das Werkzeug 101 (beispielhaft sind Schleifscheiben verschiedener Durchmesser gezeigt) an der Messfläche zwischen dem Lichtgitter-Empfänger 141 und dem Lichtgitter-Sender 142 der Werkzeugdurchmesser-Messvorrichtung 140 positioniert ist.

An dieser Messposition kann somit die Werkzeugdurchmesser-Messvorrichtung 140 aktiviert werden und den Durchmesser des Werkzeugs 101 vermessen, indem z.B. der Überdeckungsgrad des Werkzeugs 101 mit der Messfläche zwischen dem Lichtgitter-Empfänger 141 und dem Lichtgitter-Sender 142 der Werkzeugdurchmesser-Messvorrichtung 140 ermittelt wird.

Fig. 4B zeigt hierbei beispielhaft einen geringeren Überdeckungsgrad des Werkzeugs 101 mit der Messfläche zwischen dem Lichtgitter-Empfänger 141 und dem Lichtgitter-Sender 142 der Werkzeugdurchmesser-Messvorrichtung 140 aufgrund eines kleineren Werkzeugdurchmessers einer kleineren Schleifscheibe, und Fig. 4C zeigt hierbei beispielhaft einen größeren Überdeckungsgrad des Werkzeugs 101 mit der Messfläche zwischen dem Lichtgitter-Empfänger 141 und dem Lichtgitter-Sender 142 der Werkzeugdurchmesser-Messvorrichtung 140 aufgrund eines größeren Werkzeugdurchmessers einer größeren Schleifscheibe.

In Ausführungsbeispielen der Erfindung können Lichtgitter-Empfänger 141 und/oder Lichtgitter-Sender 142 der Werkzeugdurchmesser-Messvorrichtung 140 in einem jeweiligen durchsichtigen Gehäuse (z.B. aus Kunststoff oder Glas) angeordnet sein, wobei sich der Vorteil ergibt, dass diese dann vor Spritzwasser (z.B. Kühlflüssigkeit) geschützt sind.

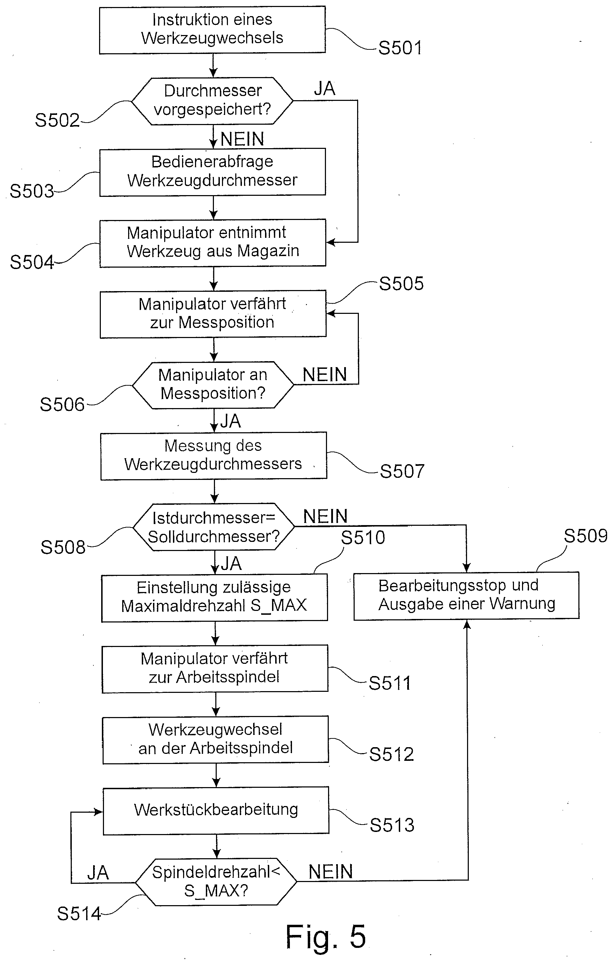

Fig. 5 zeigt ein beispielhaftes Ablaufdiagram eines Werkzeugwechsels gemäß eines Ausführungsbeispiels.

In einem Schritt S501 wird ein Werkzeugwechsel instruiert. Dies kann auf Basis eines ablaufenden bzw. von der Maschinensteuerung durchgeführten NC-Programms geschehen, oder auf Basis eines Befehls eines Bedieners am Bedienpult oder an der Maschinensteuerung der Werkzeugmaschine.

In einem Schritt S502 wird überprüft, ob für das zu entnehmende Werkzeug ein Werkzeugtyp und/oder ein Werkzeugdurchmesser vorgespeichert ist. Falls dem nicht so ist, kann der Bediener in einem Schritt S503 aufgefordert sein, am Bedienpult oder an der Maschinensteuerung der Werkzeugmaschine einen Durchmesser und/oder Werkzeugtyp einzugeben (Bedienerabfrage Werkzeugdurchmesser). Dies ist insbesondere bei Schleifwerkzeugen bzw. Schleifscheiben vorteilhaft.

In einem Schritt S504 verfährt der Manipulator 120 zu dem Werkzeugmagazin, das das zu entnehmende Werkzeug hält und entnimmt das einzuwechselnde Werkzeug. Dies kann ein Fräs- oder Bohrwerkzeug sein, oder es kann auch ein Schleifwerkzeug, wie z.B. eine Schleifscheibe sein. Dann verfährt der Manipulator 120, nachdem das Werkzeug aus dem Magazin entnommen wurde mit dem in dem Werkzeuggreifer 121 des Manipulators 120 gehaltenen Werkzeug in Richtung der Arbeitsspindel 202 zu der Messposition zwischen Werkzeugmagazin und Arbeitsspindel; Schritt S505.

Dies hat den Vorteil, dass die Werkzeugdurchmesser-Vermessung an der Messposition zwischen Werkzeugmagazin und Arbeitsspindel im Werkzeugwechselvorgang erfolgen kann, so dass zusätzliche Standzeiten vermieden werden können. Die Werkzeugdurchmesser-Vermessung erfolgt nämlich vorteilhaft in der bereits eingeplanten Nebenzeit des Werkzeugwechsels.

Sobald der Manipulator 120 an der Messposition ankommt, wobei dies durch den Positionssensor 143 detektiert wird (Schritt S506 ergibt JA), wird die Messvorrichtung 140 aktiviert. Hierbei kann der Manipulator 120 kurz anhalten oder bei aktivierter Messvorrichtung 140 durch den Messpunkt durchfahren.

Im Schritt S507 erfolgt an der Messposition die Vermessung bzw. Bestimmung des Werkzeugdurchmessers des einzuwechselnden Werkzeugs 101 mittels der Werkzeugdurchmesser-Messvorrichtung 140, insbesondere beispielhaft mittels dem Lichtgitter-Empfänger 141 und dem Lichtgitter-Sender 142 der Werkzeugdurchmesser-Messvorrichtung 140; siehe hierzu insbesondere Figs. 4A bis 4C.

Im Schritt S508 wird bestimmt, ob der gemessene bzw. bestimmte Werkzeugdurchmesser (Istdurchmesser) dem vorbestimmten, voreingestellten, vorgespeicherten oder vom Bediener eingegebenen Durchmesser (Solldurchmesser) entspricht. Alternativ kann bestimmt werden, ob der gemessene bzw. bestimmte Werkzeugdurchmesser (Istdurchmesser) in einen vorbestimmten, voreingestellten, vorgespeicherten oder vom Bediener eingegebenen, zulässigen Durchmesserbereich fällt.

Falls die Überprüfung in Schritt S508 negativ ist, kann in einem Schritt S509 ein Bearbeitungsstop an der Werkzeugmaschine erfolgen und/oder eine Warnung an den Bediener ausgegeben werden.

Falls die Überprüfung in Schritt S508 positiv ist und der gemessene bzw. bestimmte Werkzeugdurchmesser dem vorbestimmten, voreingestellten, vorgespeicherten oder vom Bediener eingegebenen Durchmesser bzw. Durchmesserbereich entspricht, kann die Bearbeitung mit dem Werkstück freigegeben werden.

Hierzu ist es, insbesondere bei Schleifwerkzeugen, bevorzugt, dass im Schritt S510 auf Basis des in Schritt S507 gemessenen bzw. bestimmten Werkzeugdurchmessers eine zulässige Maximaldrehzahl S_MAX eingestellt wird.

Hierbei können in der Maschinensteuerung auf Basis von Werkzeugdurchmessern und/oder Werkzeugdurchmesserbereichen zulässige Maximaldrehzahlen vorgespeichert sein, wobei größere Werkzeugdurchmesser bevorzugt kleineren zulässigen Maximaldrehzahlen zugeordnet sind und kleinere Werkzeugdurchmesser bevorzugt größeren zulässigen Maximaldrehzahlen zugeordnet sind.

Außerdem können zulässige Maximaldrehzahlen auf Basis eines Werkzeugtyps eingestellt werden, so dass z.B. Schleifwerkzeuge kleineren zulässigen Maximaldrehzahlen zugeordnet sind, als Werkzeuge mit bestimmter Schneide, wie z.B. Fräs- oder Bohrwerkzeugen.

Dies hat den Vorteil, dass direkt bei dem Werkzeugwechselvorgang der Durchmesser des Werkzeugs überprüft werden kann und abhängig von Durchmesser und Werkzeugtyp eine passende maximal zulässige Drehzahl einstellbar ist, die den für den bestimmten Werkzeugtyp passenden Sicherheitsbestimmungen entspricht. Somit ist es vorteilhaft möglich, an derselben Werkzeugmaschine Fräs- bzw. Bohrwerkzeuge einzuwechseln, als auch Schleifwerkzeuge, ohne Sicherheitseinbußen.

Im Schritt S511 verfährt der Manipulator 120 dann zur Arbeitsspindel 202 und vollführt an der Arbeitsspindel 202 den Werkzeugwechsel in Schritt S512, wobei das in Schritt S507 vermessene Werkzeug 101 an der Arbeitsspindel 202 eingewechselt wird (und gegebenenfalls ein dort bisher aufgenommenes Werkzeug entnommen wird, um wieder dem Werkzeugmagazin zugeführt zu werden).

Nach Einwechseln des Werkzeugs 101 an der Arbeitsspindel 202 kann in einem Schritt S513 die Werkstückbearbeitung mit dem eingewechselten Werkzeug erfolgen, wobei in einem Schritt S514 stets überprüft wird, ob die Spindeldrehzahl unter der maximal zulässigen Drehzahl S_MAX bleibt, die in Schritt S510 eingestellt wurde.

Falls die Spindeldrehzahl die maximal zulässige Drehzahl S_MAX überschreitet, wird in Schritt S509 ein Bearbeitungsstop herbeigeführt und eine Warnung an den Bediener ausgegeben.

Somit kann vorteilhaft sichergestellt werden, dass die Spindeldrehzahl nicht die maximal für den jeweiligen Werkzeugdurchmesser zulässige Drehzahl überschreitet, insbesondere bei Schleifwerkzeugen bzw. Schleifscheiben.

Um die Sicherheit noch zu vergrößern, kann die Überprüfung der Schritte S508 und/oder S514, die jeweils zu einem Bearbeitungsstop und/oder zu einer Warnung an den Bediener führen können, von zwei redundant nebeneinander arbeitenden Vorrichtungen durchgeführt werden. So ist es z.B. vorteilhaft möglich, dass die Steuervorrichtung bzw. insbesondere PLC (Program Logic Control; bzw. SPS, speicherprogrammierbare Steuerung) der Werkzeugmaschine 200 die Schritte S508 und/oder S514 durchführt und zudem eine zweite, unabhängige Sicherheitsvorrichtung die Schritte S508 und/oder S514 durchführt.

In den vorstehenden Ausführungsbeispielen wurde eine Werkzeugdurchmesser-Messvorrichtung mit einem Lichtgitter-Sender und einem Lichtgitter-Empfänger vorgeschlagen. Jedoch ist die vorliegende Erfindung nicht auf Lichtgitter-Sender und Lichtgitter-Empfänger verwendende Werkzeugdurchmesser-Messvorrichtungen beschränkt. Vielmehr können weitere optisch arbeitende Werkzeugdurchmesser-Messvorrichtungen vorgeschlagen werden, z.B. mit einer oder mehrerer Lichtschranken oder auch mit einer oder mehreren Kameras zur Analyse des Werkzeugdurchmessers durch optische Vermessung.

Zusammenfassend kann ein System zum Wechseln und Einlegen bzw. Vorlegen von Werkzeugen an einer Werkzeugmaschine und eine Werkzeugmaschine mit einem solchen System vorgeschlagen werden, die es effizient, ohne Stillstandzeiten und mit der erforderlichen Sicherheit ermöglicht, an der Werkzeugmaschine sowohl Fräs- und Bohrwerkzeuge als auch Schleifwerkzeuge einzusetzen.

## Patentansprüche

1. System zum Wechseln und Einlegen bzw. Vorlegen von Werkzeugen an einer Werkzeugmaschine, umfassend:
- eine Werkzeugwechselvorrichtung mit einem Manipulator, der dazu eingerichtet ist, in einem automatischen Werkzeugwechselvorgang ein einzuwechselndes Werkzeug aus einem Werkzeugmagazin der Werkzeugmaschine an einer Entnahmeposition zu entnehmen und einer Arbeitsspindel der Werkzeugmaschine an einer Werkzeugwechselposition zu übergeben, und
- eine Werkzeugdurchmesser-Messvorrichtung, die dazu eingerichtet ist, in dem automatischen Werkzeugwechselvorgang der Werkzeugwechselvorrichtung einen Werkzeugdurchmesser bzw. Werkzeugradius des von dem Manipulator aus dem Werkzeugmagazin der Werkzeugmaschine entnommenen einzuwechselnden Werkzeugs zu bestimmen.

2. System gemäß Anspruch 1, **dadurch gekennzeichnet, dass**
der Manipulator dazu eingerichtet ist, zwischen der Entnahmeposition des Werkzeugmagazins der Werkzeugmaschine und der Werkzeugwechselposition zu verfahren, und
die Werkzeugdurchmesser-Messvorrichtung dazu eingerichtet ist, den Werkzeugdurchmesser bzw. Werkzeugradius des von dem Manipulator aus dem Werkzeugmagazin der Werkzeugmaschine entnommenen einzuwechselnden Werkzeugs an einer zwischen der Entnahmeposition und der Werkzeugwechselposition angeordneten Messposition zu bestimmen.

3. System gemäß einem der vorstehenden Ansprüche, **gekennzeichnet durch** eine Sicherheitsvorrichtung, die dazu eingerichtet ist, auf Basis eines von der Werkzeugdurchmesser-Messvorrichtung ermittelten Werkzeugdurchmessers bzw. Werkzeugradius eine maximal zulässige Spindeldrehzahl der Arbeitsspindel für das einzuwechselnde Werkzeug zu bestimmen.

4. System gemäß Anspruch 3, **dadurch gekennzeichnet, dass**
die Sicherheitsvorrichtung dazu eingerichtet ist, auf Basis des von der Werkzeugdurchmesser-Messvorrichtung ermittelten Werkzeugdurchmessers bzw. Werkzeugradius und des Werkzeugtyps eine maximal zulässige Spindeldrehzahl der Arbeitsspindel für das einzuwechselnde Werkzeug zu bestimmen.

5. System gemäß Anspruch 3 oder 4, **dadurch gekennzeichnet, dass**
die Sicherheitsvorrichtung dazu eingerichtet ist, die Spindeldrehzahl der Arbeitsspindel bei der Bearbeitung eines Werkstücks mit dem einzuwechselnden Werkzeug zu überwachen und einen Bearbeitungsstop durchzuführen und/oder eine Warnung an einen Bediener auszugeben, wenn die überwachte Spindeldrehzahl die eingestellte maximal zulässige Spindeldrehzahl der Arbeitsspindel für das einzuwechselnde Werkzeug überschreitet.

6. System gemäß Anspruch 3, 4 oder 5, **dadurch gekennzeichnet, dass**
die Sicherheitsvorrichtung dazu eingerichtet ist, den von der Werkzeugdurchmesser-Messvorrichtung ermittelten Werkzeugdurchmesser bzw. Werkzeugradius des einzuwechselnden Werkzeugs mit einem Solldurchmesser bzw. Sollradius und/oder einem Solldurchmesserbereich bzw. Sollradiusbereich zu vergleichen, und einen Bearbeitungsstop durchzuführen und/oder eine Warnung an einen Bediener auszugeben, wenn der von der Werkzeugdurchmesser-Messvorrichtung ermittelte Werkzeugdurchmesser bzw. Werkzeugradius des einzuwechselnden Werkzeugs von dem Solldurchmesser bzw. Sollradius und/oder dem Solldurchmesserbereich bzw. Sollradiusbereich abweicht.

7. System gemäß einem der vorstehenden Ansprüche, **dadurch gekennzeichnet, dass**
die Werkzeugdurchmesser-Messvorrichtung eine optische Vermessungseinrichtung zum optischen Vermessen des einzuwechselnden Werkzeugs aufweist, insbesondere umfassend eine Kamera und/oder ein Lichtgitter.

8. System gemäß einem der vorstehenden Ansprüche, **dadurch gekennzeichnet, dass**
die Werkzeugdurchmesser-Messvorrichtung einen Lichtgitter-Empfänger und einen Lichtgitter-Sender aufweist.

9. System gemäß Anspruch 8, **dadurch gekennzeichnet, dass**
der Lichtgitter-Empfänger oder der Lichtgitter-Sender an dem Manipulator der Werkzeugwechselvorrichtung angeordnet ist.

10. System gemäß Anspruch 8 oder 9, **dadurch gekennzeichnet, dass**
der Lichtgitter-Sender und/oder der Lichtgitter-Empfänger an einem das Werkzeugmagazin haltenden Gestell angeordnet sind/ist.

11. System gemäß einem der vorstehenden Ansprüche, **gekennzeichnet durch** einen Positionssensor, der dazu eingerichtet ist, festzustellen, wenn der Manipulator sich an einer Messposition befindet, und
die Werkzeugdurchmesser-Messvorrichtung ist dazu eingerichtet, den Werkzeugdurchmesser bzw. Werkzeugradius des von dem Manipulator aus dem Werkzeugmagazin der Werkzeugmaschine entnommenen einzuwechselnden Werkzeugs zu bestimmen, wenn der Positionssensor feststellt, dass der Manipulator sich an der Messposition befindet.

12. Werkzeugmaschine mit:
einer werkzeugtragenden Arbeitsspindel,
einem Werkzeugmagazin, und
einem System gemäß einem der vorstehenden Ansprüche.

13. Werkzeugmaschine gemäß Anspruch 12, **dadurch gekennzeichnet, dass** eine Steuervorrichtung der Werkzeugmaschine mit der Werkzeugdurchmesser-Messvorrichtung verbunden ist und dazu eingerichtet ist, auf Basis eines von der Werkzeugdurchmesser-Messvorrichtung ermittelten Werkzeugdurchmessers bzw. Werkzeugradius eine maximal zulässige Spindeldrehzahl der Arbeitsspindel für das einzuwechselnde Werkzeug einzustellen.

14. Werkzeugmaschine gemäß Anspruch 13, **dadurch gekennzeichnet, dass** die Steuervorrichtung der Werkzeugmaschine dazu eingerichtet ist, auf Basis des von der Werkzeugdurchmesser-Messvorrichtung ermittelten Werkzeugdurchmessers bzw. Werkzeugradius und des Werkzeugtyps eine maximal zulässige Spindeldrehzahl der Arbeitsspindel für das einzuwechselnde Werkzeug einzustellen.

15. Werkzeugmaschine gemäß Anspruch 13 oder 14, **dadurch gekennzeichnet, dass**
die Steuervorrichtung der Werkzeugmaschine dazu eingerichtet ist, die Spindeldrehzahl der Arbeitsspindel bei der Bearbeitung eines Werkstücks mit dem einzuwechselnden Werkzeug zu überwachen und einen Bearbeitungsstop durchzuführen und/oder eine Warnung an einen Bediener auszugeben, wenn die überwachte Spindeldrehzahl die eingestellte maximal zulässige Spindeldrehzahl der Arbeitsspindel für das einzuwechselnde Werkzeug überschreitet; und/oder dass
die Steuervorrichtung dazu eingerichtet ist, den von der Werkzeugdurchmesser-Messvorrichtung ermittelten Werkzeugdurchmesser bzw. Werkzeugradius des einzuwechselnden Werkzeugs mit einem Solldurchmesser bzw. Sollradius und/oder einem Solldurchmesserbereich bzw. Sollradiusbereich zu vergleichen, und einen Bearbeitungsstop durchzuführen und/oder eine Warnung an einen Bediener auszugeben, wenn der von der Werkzeugdurchmesser-Messvorrichtung ermittelte Werkzeugdurchmesser bzw. Werkzeugradius des einzuwechselnden Werkzeugs von dem Solldurchmesser bzw. Sollradius und/oder dem Solldurchmesserbereich bzw. Sollradiusbereich abweicht.
